# EUROPÄISCHE PATENTANMELDUNG

(11) **EP 1 847 517 A2**
(43) Veröffentlichungstag der Anmeldung: **24.10.2007**
(21) Anmeldenummer: 07105703.8
(22) Anmeldetag: 05.04.2007
(51) Int. Cl.: C04B 35/14, C03C 10/00

(54) **Werkstoff, insbesondere für ein optisches Bauteil zum Einsatz in der Mikrolithographie und Verfahren zur Herstellung eines Formkörpers aus dem Werkstoff**

(30) Priorität: 20.04.2006 DE 102006018711
(71) Anmelder: Heraeus Quarzglas GmbH & Co. KG, 63450 Hanau (DE)
(72) Erfinder: Kuehn, Bodo, 63571 Gelnhausen (DE); Ochs, Stefan, 65520 Bad Camberg (DE)
(74) Vertreter: Staudt, Armin Walter

(57) **Zusammenfassung**

Es geht in der Erfindung um einen Werkstoff, der für UV-Strahlung mit einer Wellenlänge unterhalb von 250 nm eine geringe Absorption, eine geringe Doppelbrechung, hohe chemische Resistenz sowie eine hohe Strahlenbeständigkeit aufweist, und der daher insbesondere für die Herstellung optischer Bauteile für die Mikrolithographie verwendbar ist. Erfindungsgemäß besteht der Werkstoff aus synthetisch erzeugten und ein polykristallines Gefüge bildenden Quarzkristalliten mit einer mittleren Korngröße im Bereich zwischen 500 nm und 30 µm. Das erfindungsgemäße Verfahren zur Herstellung eines Formkörpers aus dem Werkstoff umfasst ein Bereitstellen einer Körnung aus synthetisch erzeugten Quarzkristallen mit einer mittleren Korngröße im Bereich zwischen 500 nm und 30 µm, und ein Sintern der Körnung zu einem Formkörper aus polykristallinem Quarz.

## Beschreibung

Die Erfindung betrifft einen Werkstoff, insbesondere für ein optisches Bauteil zum Einsatz in der Mikrolithographie, sowie ein Verfahren zur Herstellung eines Formkörpers aus dem Werkstoff.

Die aus dem Werkstoff gemäß vorliegender Erfindung gefertigten optischen Bauteile werden allgemein für die Übertragung energiereicher, ultravioletter Strahlung eingesetzt, insbesondere in Belichtungs- und Projektionsoptiken von Mikrolithographiegeräten im Rahmen der Herstellung hochintegrierter Schaltungen für Halbleiterchips. Die erreichbare Auflösung des Belichtungs- oder Projektionsobjektivs hängt von der Arbeitswellenlänge ab. Derzeit sind Mikrolithographiegeräte vorwiegend mit Excimerlasern ausgestattet, die UV-Strahlung einer Wellenlänge von 248 nm (KrF-Laser) oder von 193 nm (ArF-Laser) abgeben.

Wegen seiner mechanischen und chemischen Resistenz und seiner geringen Doppelbrechung ist Quarzglas ein bevorzugter Werkstoff für die Herstellung hochwertiger optischer Bauteile. Kurzwellige UV-Strahlung kann in optischen Bauteilen aus Quarzglas jedoch Defekte erzeugen, die zu Absorptionen führen. Die Art und das Ausmaß einer Defektbildung hängen von der Art und der Qualität des jeweiligen Quarzglases ab, die im Wesentlichen durch strukturelle Eigenschaften, wie Dichte, Brechzahlverlauf, Homogenität und chemische Zusammensetzung bestimmt wird. Bei weiter steigenden Anforderungen an die Strahlenbeständigkeit oder bei fortschreitender Verkürzung der Arbeitswellenlänge sind daher physikalische und materialtechnisch bedingte Grenzen auch bei Quarzglas zu erwarten.

Alternativ zu Quarzglas sind synthetisch hergestellte kristalline Werkstoffe, die für kurzwellige UV-Strahlung transparent sind, und die sich durch hohe UV-Strahlenbeständigkeit auszeichnen als Linsenmaterial in der Erprobung. Als Beispiele seien kristalline Fluoride wie Kalziumfluorid (CaF₂) oder Bariumfluorid (BaF₂), kristalline Erdalkalioxide, insbesondere MgO, sowie einkristalliner und polykristalliner Spinell (MgAl₂O₄) genannt. Es zeigt sich aber, dass selbst Einkristalle mit kubischer Gitterstruktur mit kurzwelliger UV-Strahlung eine beachtliche intrinsische Doppelbrechung aufweisen, welche die Abbildungstreue des daraus gefertigten optischen Bauteils merklich beeinträchtigt.

Viele kristalline Werkstoffe (wie zum Beispiel CaF₂), die im Hinblick auf ihre UV-Strahlenbeständigkeit und Transparenz für den Einsatz in der Mikrolithographie an und für sich geeignet wären, zeigen jedoch eine schlechte chemische Beständigkeit. Dies ist insbesondere ungünstig, wenn das aus dem Kristall gefertigte optische Bauteil mit einer Flüssigkeit in Kontakt ist, wie bei mikrolithographischen Projektionssystemen, die nach der Technik der sogenannten "Immersions-Lithographie" arbeiten. Hierbei ist der Spalt zwischen dem letzten optischen Bauteil des Linsensystems und dem zu belichtenden Substrat mit einer Flüssigkeit mit höherer Brechzahl als Luft gefüllt.

Eine weitere Schwierigkeit ergibt sich durch die übliche Herstellung künstlicher Kristalle über ein als Bridgman-Verfahren bekanntes Tiegelschmelzverfahren, das zu einem Eintrag von Verunreinigungen aus dem Tiegelmaterial in den Kristall führen und dadurch Absorptionsbanden im Bereich der Arbeitswellenlänge erzeugen kann.

Der Erfindung liegt daher die Aufgabe zugrunde, einen Werkstoff für die Herstellung eines optisches Bauteils bereitzustellen, der für UV-Strahlung mit einer Wellenlänge unterhalb von 250 nm eine geringe Absorption, eine geringe Doppelbrechung, hohe chemische Resistenz sowie eine hohe Strahlenbeständigkeit aufweist, und der daher insbesondere für die Herstellung optischer Bauteile für die Mikrolithographie verwendbar ist.

Weiterhin liegt der Erfindung die Aufgabe zugrunde, ein Verfahren zur Herstellung eines derartigen Werkstoffs anzugeben.

Diese Aufgabe wird hinsichtlich des Werkstoffs erfindungsgemäß dadurch gelöst, dass dieser aus synthetisch erzeugten und ein polykristallines Gefüge bildenden Quarzkristalliten mit einer mittleren Korngröße im Bereich zwischen 500 nm und 30 µm besteht.

Der erfindungsgemäße polykristalline Werkstoff besteht aus synthetisch erzeugten Quarzkristalliten aus einem spezifischen Korngrößenbereich.
- Die synthetische Herstellung der Quarzkristallite ermöglicht eine hohe Reinheit des Werkstoffs und damit eine ausreichende Transparenz im Wellenlängenbereich unterhalb von 250 nm bis etwa 150 nm.
- Die spezifische Korngröße der Quarzkristallite hat mehrere wichtige Aspekte:
   a) Der Lichtdurchgang durch das polykristalline Quarzgefüge wird durch diffuse Streuung an Poren und zusätzliche Lichtstreuung durch Doppelbrechung bei jedem Übergang des Lichtstrahles von einem in den nächsten Kristallit des Gefüges vermindert.
      Im Normalfall liegt kristalliner Quarz in der trigonalen α-Quarz-Phase vor, die bei Normaldruck bis zu einer Temperatur von 573 °C stabil ist. In diesem polykristallinem Quarzwerkstoff wird der auf Doppelbrechung beruhende Streubeitrag durch kleine Gefügekorngrößen reduziert. Daraus ergibt sich eine maximale mittlere Größe der Quarzkristallite von 30 µm.
   b) Andererseits ergibt sich beim Lichtdurchgang durch das polykristalline Quarzgefüge auch ein Verlustanteil aufgrund von Streuung an Korngrenzen. Daher nimmt mit zunehmender Anzahl von Korngrenzen und damit mit zunehmender Anzahl an Quarzkristalliten pro Volumeneinheit die Lichtstreuung zu. Daraus ergibt sich eine minimale mittlere Größe der Quarzkristallite von 0,5 µm.
   c) Außerdem wird der Effekt der Doppelbrechung jedes einzelnen Quarzkristallits durch die statistische Verteilung der Orientierung der einzelnen Kristallite im polykristallinen Gefüge eliminiert, so dass das aus dem Werkstoff hergestellte optische Bauteil insgesamt eine geringe Doppelbrechung unter 1 nm/cm zeigt.
- Besonders wichtig ist außerdem, dass der polykristalline SiO₂-Werkstoff aufgrund seines kristallinen Gefüges eine im Vergleich zu Quarzglas deutlich höhere Beständigkeit gegenüber kurzwelliger UV-Strahlung hat.

Für die Bestimmung der mittleren Korngröße der Quarzkristallite kommt in erster Linie eine übliche softwaregesteuerte Bildauswertung in Frage oder die Auszählung nach dem sogenannten Kreisverfahren.

Der erfindungsgemäße kristalline SiO₂-Werkstoff ist aufgrund seiner hohen Transparenz im kurzwelligen UV-Bereich, seiner UV-Strahlenbeständigkeit und seiner chemischen Beständigkeit für die Herstellung eines optischen Bauteils geeignet, insbesondere für die Mikrolithographie einschließlich der Immersions-Lithographie.

Insbesondere im Hinblick auf die Verwendung des erfindungsgemäßen Werkstoffs für die Herstellung optischer Bauteile für den Einsatz mit Strahlung im kurzwelligen UV-Wellenlängenbereich hat es sich bewährt, wenn die Quarzkristallite eine mittlere Korngröße im Bereich zwischen 750 nm und 20 µm, vorzugsweise eine mittlere Korngröße im Bereich zwischen 1 µm bis 15 µm, und besonders bevorzugt eine mittlere Korngröße im Bereich zwischen 2 µm und 10 µm aufweisen.

Die Ober- und Untergrenzen dieser Korngrößenbereiche ergeben sich gemäß den oben erläuterten Betrachtungen hinsichtlich des auf Doppelbrechung beruhenden Streubeitrags, des Verlustanteils der Transmission aufgrund von Streuung an Korngrenzen, der Verminderung des Effektes der Doppelbrechung durch die statistische Verteilung der Kristallit-Orientierung.

Hinsichtlich einer geringen Streuung hat es sich als günstig erwiesen, wenn der Werkstoff eine Gesamtporosität von weniger als 1 ppm aufweist.

In dem Zusammenhang spielt auch die Größe etwaiger Poren in dem Werkstoff eine zentrale Rolle. Vorteilhafterweise beträgt die Größe vorhandener Poren weniger als 1 µm, vorzugsweise weniger als 0,5 µm.

Hinsichtlich des Verfahrens zur Herstellung eines Formkörpers aus dem Werkstoff wird die oben genannte Aufgabe erfindungsgemäß durch ein Verfahren gelöst, das folgende Maßnahmen umfasst:
(A) Bereitstellen einer Körnung aus synthetisch erzeugten Quarzkristallen mit einer mittleren Korngröße im Bereich zwischen 500 nm und 30 µm, und
(B) Sintern der Körnung zu einem Formkörper aus polykristallinem Quarz.

Zur Herstellung eines Werkstoffs für ein optisches Bauteils gemäß der vorliegenden Erfindung wird Körnung aus synthetisch erzeugten Quarzkristallen mit einem spezifischen Korngrößenbereich gesintert.
- Durch die synthetische Herstellung der Quarzkristalle wird eine hohe Reinheit des Werkstoffs und damit eine ausreichende Transparenz im Wellenlängenbereich unterhalb von 250 nm bis etwa 150 nm erreicht.
- Beim Sintern der Quarzkristalle zu einem Formkörper aus polykristallinem Quarz ändert sich deren Korngröße nicht oder nur wenig. Der gesinterte polykristalline Formkörper besteht demnach aus Quarzkristalliten mit einer mittleren Korngröße im Bereich zwischen 500 nm und 30 µm, wodurch die oben anhand des erfindungsgemäßen Werkstoffes geschilderten Effekte hinsichtlich der verminderten Lichtstreuung und Doppelbrechung erreicht werden.
- Der so hergestellte Werkstoff zeichnet sich aufgrund seines kristallinen Gefüges durch eine im Vergleich zu Quarzglas deutlich höhere Beständigkeit gegenüber kurzwelliger UV-Strahlung aus.

Der erfindungsgemäß hergestellte polykristalline SiO₂-Werkstoff ist aufgrund seiner hohen Transparenz im kurzwelligen UV-Bereich, seiner UV-Strahlenbeständigkeit und seiner chemischen Beständigkeit für die Herstellung eines optischen Bauteils geeignet, insbesondere für die Mikrolithographie einschließlich der Immersions-Lithographie.

In einer bevorzugten Ausführungsform des erfindungsgemäßen Herstellungsverfahrens umfasst das Bereitstellen der Quarzkristall-Körnung gemäß Maßnahme (A) folgende Verfahrensschritte:
(a) Bilden von amorphem SiO₂ durch Hydrolyse oder Oxidation einer im Temperaturbereich bis 500 °C verdampfbaren Siliciumverbindung,
(b) Einsetzen des amorphen SiO₂ als Rohstoff für die Herstellung von synthetischem Quarz-Zuchtkristall, und
(c) Einsetzen des Quarz-Zuchtkristalls zur Bildung der Quarzkristall-Körnung.

In einem ersten Verfahrensschritt werden amorphe SiO₂-Partikel mittels der bekannten Plasma- oder CVD-Abscheideverfahren gebildet (OVD, VAD, MCVD, PCVD und dergleichen), wobei eine bis 500 °C verdampfbare, synthetische Siliciumverbindung als Glasausgangsmaterial eingesetzt und daraus amorphe SiO₂-Partikel gebildet werden.

Durch die Verdampfbarkeit der synthetischen Siliciumverbindung bei noch leicht handhabbarer Temperatur unterhalb von 500 °C ist eine relativ problemlose Reinstdarstellung der Verbindung erreichbar. Dies wirkt sich auf die Reinheit der amorphen SiO₂-Partikel besonders günstig aus.

Der so erzeugte partikelförmige oder massive SiO₂-Rohstoff wird für die Herstellung von synthetischem Quarz-Zuchtkristall eingesetzt. Der amorphe SiO₂-Rohstoff wird dabei in kristallinen Werkstoff transformiert, wobei die bekannten Methoden zur Kristallsynthese durch Züchtung aus der Schmelze, Züchtung aus Lösungen und keramische Züchtungsverfahren geeignet sind. Das synthetisch erzeugte Glasausgangsmaterial gewährleistet hierbei eine hohe Reinheit sowohl der amorphen SiO₂-Partikel, als auch des daraus erzeugten SiO₂-Rohstoffs, als auch des synthetischen Quarz-Zuchtkristalls. Der so erzeugte synthetische Quarz-Zuchtkristall liegt in einkristalliner Form, in polykristalliner Form oder als Vielzahl von Kristallen (einkristallin oder polykristallin) vor.

Der Quarz-Zuchtkristall wird unmittelbar als Quarzkristall-Körnung eingesetzt, sofern die Korngröße unmittelbar geeignet ist, oder er wird zu der Quarzkristall-Körnung weiterverarbeitet.

Es hat sich als besonders vorteilhaft erwiesen, wenn das Bilden von amorphem SiO₂ gemäß Verfahrensschritt (a) ein Abscheiden von SiO₂-Partikeln unter Bildung einer massiven Vorform aus amorphem SiO₂ umfasst.

Es handelt sich hierbei um einen allgemein bekannten und bewährten Verfahrensschritt zur Herstellung von Rohlingen aus synthetischem Quarzglas für die Herstellung von Bauteilen zum Einsatz in der Optik oder in der Telekommunikationstechnik.

Die massive glasige Vorform aus synthetischem SiO₂ wird anschließend als Rohstoff für die Herstellung von synthetischem Quarz-Zuchtkristall eingesetzt.

Dies erfordert in der Regel ein mechanisches oder chemisches Aufbrechen der Vorform. Demgemäß umfasst das Einsetzen des amorphen SiO₂ als Rohstoff für die Herstellung des synthetischen Quarz-Zuchtkristalls gemäß Verfahrensschritt (b) vorzugsweise ein Aufbrechen der Vorform aus amorphem SiO₂, wodurch diese zerkleinert oder aufgelöst wird,

Das Aufbrechen der Vorform gestaltet sich besonders einfach, wenn die Vorform aus porösem SiO₂ gebildet wird.

Derartige Vorformen aus porösem SiO₂ werden auch als "Sootkörper" bezeichnet. Die Ausbildung der Vorform als poröser Sootkörper erlaubt oder vereinfacht die nachträgliche Bearbeitung, Reinigung oder Dotierung, sofern gewünscht. Insbesondere ist hierbei eine Dehydratationsbehandlung zur Verminderung des Hydroxylgruppengehalts zu nennen.

Andererseits neigen poröse Sootkörper zur Aufnahme von Substanzen aus der Umgebung, was ihre Aufbewahrung und Handhabung erschwert. Daher hat es sich auch bewährt, wenn die Vorform aus transparentem oder opakem Quarzglas mit einer Dichte von mindestens 2,1 g/cm³ ausgebildet ist.

Die hohe Dichte vermindert die Gefahr von Verunreinigungen des SiO₂ vor dem Einsatz der Vorform als Ausgangsmaterial für die Kristallzüchtung.

Es hat sich bewährt, wenn die Herstellung des synthetischen Quarz-Zuchtkristalls gemäß Verfahrensschritt (b) durch ein Hydrothermalverfahren erfolgt.

Bei der Quarzkristall-Züchtung im Hydrothermalverfahren gemäß der Erfindung wird im heißeren Bereich eines Druckgefäßes eine Lösung des amorphen SiO₂ erzeugt, die von dem synthetisch erzeugten amorphen SiO₂ gespeist wird. Im kälteren Bereich des Druckgefäßes sind ein oder mehrere Kristallisationskeime angeordnet, an denen infolge des Temperaturgefälles im Druckbehälter synthetischer Quarzkristall auskristallisiert. Ein Kristallziehen aus der Schmelze und die damit einhergehende Gefahr von Verunreinigungen aus dem Tiegelmaterial können so vermieden werden. Auch wegen des hochreinen Ausgangsmaterials zeichnet sich der so erhaltene Quarz-Zuchtkristall durch eine besonders hohe Reinheit aus.

In der Regel wird Quarz-Zuchtkristall mit einer Korngröße erhalten, die für den bestimmungsgemäßen Einsatz zu groß ist. In diesem Fall umfasst das Verarbeiten des Quarz-Zuchtkristalls zu der Quarzkristall-Körnung gemäß Verfahrensschritt (c) vorzugsweise eine Zerkleinerung der Quarz-Zuchtkristalle.

Die Zerkleinerung des Quarz-Zuchtkristalls erfolgt im einfachsten Fall mit mechanischen Mitteln durch Mahlen, Rütteln, Ultraschall und dergleichen, wobei die Zerkleinerungswirkung durch thermische Maßnahmen (Abschrecken) oder chemische Mittel (Ätzmittel) unterstützt werden kann.

Insbesondere im Hinblick auf die Verwendung des erfindungsgemäßen Werkstoffs für die Herstellung optischer Bauteile für den Einsatz mit Strahlung im kurzwelligen UV-Wellenlängenbereich hat es sich bewährt, wenn die synthetisch erzeugten Quarzkristalle mit einer mittleren Korngröße im Bereich zwischen 750 nm und 20 µm, vorzugsweise mit einer mittleren Korngröße im Bereich zwischen 1 µm bis 15 µm, und besonders bevorzugt mit einer mittleren Korngröße im Bereich zwischen 2 µm und 10 µm, bereit gestellt werden.

In einer besonders bevorzugten Verfahrensvariante umfasst das Sintern der Quarzkristall-Körnung zu einem Formkörper gemäß Maßnahme (B) ein Gasdrucksintern.

Beim Gasdrucksintern wird die zu sinternde Quarzkristall-Körnung unter erhöhtem Druck erhitzt und dabei bei einer Temperatur unterhalb der Schmelztemperatur von Quarz erhitzt. Der Überdruck beschleunigt den Sintervorgang und reduziert eine etwaige Porenbildung. Dadurch wird reproduzierbar ein kristalliner Werkstoff erhalten, der eine Gesamtporosität von weniger als 1 ppm aufweist. Die Porengröße etwaiger Restporen liegt bei weniger als 1 µm, vorzugsweise weniger als 0,5 µm.

Es hat sich als günstig erwiesen, wenn der Formkörper zu einem Rohling für ein optisches Bauteil bearbeitet wird, wobei die Bearbeitung ein Entfernen von Randbereichen des Formkörpers umfasst.

Der Randbereich des Formkörpers kann sich hinsichtlich seiner thermischen Eigenschaften und seiner chemischen Zusammensetzung vom Innenvolumen unterscheiden, was zu unerwünschten elastischen Spannungen im Rohling führen kann. Von dem Formkörper wird vorzugsweise so viel Randvolumen abgetragen, dass der polykristalline Rohling bereits in einem endnahen Maß für das herzustellende Bauteil vorliegt. Hierzu weißt der Formkörper gegenüber dem Endmaß des Rohlings ein Aufmaß von mindestens 10% auf (bezogen auf die jeweilige Abmessung vor dem Abnehmen des Aufmaßes). Zum Beseitigen von Restspannungen ist es vorteilhaft, den Formkörper zu tempern, wobei das Tempern vorzugsweise vor dem Entfernen des Randvolumens erfolgt.

Nachfolgend wird die Erfindung anhand eines Ausführungsbeispiels näher erläutert. Dabei wird eine Linse für ein Projektionssystem für die Immersions-Mikrolithographie hergestellt.

### 1. Herstellen einer Körnung aus synthetisch erzeugten Quarzkristallen

### 1.1 Bilden von amorphem SiO₂ durch Flammenhydrolyse von SiCl₄

Es wird ein SiO₂-Sootkörper nach dem sogenannten OVD-Verfahren hergestellt, wie dies auch sonst bei der Herstellung von Quarzglaskörpern aus synthetischem SiO₂ üblich ist. Hierzu werden auf einem um seine Längsachse rotierenden Träger durch Hin- und Herbewegung einer Anordnung von Abscheidebrennern schichtweise SiO₂-Partikel abgeschieden. Den Abscheidebrennern wird dabei SiCl₄ als Glasausgangsmaterial zugeführt und dieses in einer Brennerflamme in Gegenwart von Sauerstoff zu SiO₂ hydrolysiert.

Nach Beendigung des Abscheideverfahrens und Entfernen des Trägers wird ein hohlzylindrischer Sootkörper erhalten, der zum Entfernen der herstellungsbedingt eingebrachten Hydroxylgruppen einer Dehydratationsbehandlung unterworfen wird. Hierzu wird das Sootrohr in vertikaler Ausrichtung in einen Dehydratationsofen eingebracht und bei einer Temperatur im Bereich um 1.200 °C unter Vakuum behandelt.

Die Behandlungsdauer beträgt etwa drei Stunden, so dass sich eine Hydroxylgruppen-Konzentration von etwa 20 Gew.-ppm einstellt.

Der so behandelte SiO₂-Sootkörper wird anschließend in einem Verglasungsofen bei einer Temperatur im Bereich um 1.600 °C zu einem transparenten Quarzglaskörper verglast und dieser abschließend in einer Mühle mit einer Innenauskleidung aus Quarzglas zerkleinert, wobei Bruchstücke in einem weiten Größenbereich erhalten werden.

### 1.2 Einsetzen der Quarzglas-Bruchstücke für die Synthese von Zuchtkristallen

Die Quarzglas-Bruchstücke werden als Rohstoff für die Herstellung von synthetischem Quarzkristall nach dem "Hydrothermalverfahren" eingesetzt.

In einem senkrecht orientierten Autoklaven wird dabei ein Druck von 120 bar und ein Temperaturgradient zwischen 350 °C (oberer Bereich) und 400 °C (unterer Bereich) erzeugt. Im unteren Bereich sind die Quarzglas-Bruchstücke in einer leicht alkalischen Lösung aufgelöst. Im oberen Bereich des Autoklaven sind orientiert geschnittene Quarzplatten - als Keime - angeordnet. Infolge des Temperaturgefälles von unten nach oben kondensiert das im unteren Bereich gelöste Quarzglas an den Quarzplatten unter Bildung eines synthetischen Quarz-Zuchtkristalls mit einer Kristallwachstumsrate von etwa 1,5 mm/Tag aus.

Der so hergestellte Quarz-Zuchtkristall zeichnet sich durch eine besonders hohe Reinheit aus. Es werden folgende typischen Verunreinigungsgehalte gemessen (Angaben in Klammern in Gew.-ppb): Li (100), Na (15), K (<20) Mg (<20), Ca (<30), Fe (70), Cu (<10), Ti (<10) und Al (20).

### 1.3 Einsetzen des Quarz-Zuchtkristalls zur Bildung der Quarzkristall-Körnung

Der so hergestellte Quarz-Zuchtkristall wird in einer Mühle mit einer Innenauskleidung aus Quarzglas in einem Trockenmahlverfahren zu einem feinen Pulver aus synthetischem Quarzkristall zermahlen. Von dem erhaltenen Pulver wird der Feinanteil mit Korngrößen unterhalb von 100 nm abgetrennt. Die resultierende Quarzkörnung hat einen mittleren Durchmesser von 5 µm und besteht im Wesentlichen aus runden Körnern.

### 2. Sintern der Quarzkristall-Körnung zu polykristallinem Quarz

Die so erhaltene synthetische Quarzkristall-Körnung dient als Ausgangsmaterial für die Herstellung eines Formkörpers aus polykristallinem Quarz durch Gasdrucksintern.

Die synthetische Körnung wird hierzu in eine Grafitform gegeben und bei einer Temperatur von 1600 °C behandelt. Die Grafitform wird zunächst unter Aufrechterhaltung eines Unterdrucks von weniger als 1 mbar auf die Sintertemperatur von 1.600 °C aufgeheizt. Nach Erreichen der Sintertemperatur wird im Ofen ein Überdruck von 10 bar eingestellt und die Form bei dieser Temperatur ca. 3 h lang gehalten. Das anschließende Abkühlen auf eine Temperatur von 400 °C erfolgt mit einer Abkühlrate von 2 °C/min, wobei der Überdruck weiter aufrecht erhalten wird. Danach erfolgt das freie Abkühlen auf Raumtemperatur.

Es wird ein homogener, spannungsfreier Vollzylinder aus polykristallinem, transparentem Quarz mit einer Restporosität von 0,5 ppm erhalten, wobei die Quarzkristallite eine mittlere Korngröße um 5 µm aufweisen.

Der Vollzylinder hat einen Außendurchmesser von 300 mm und eine Höhe von 80 mm. Er wird zu einem Linsenrohling für ein Projektionsobjektiv bearbeitet, indem von den Stirnflächen jeweils eine Randschicht von 5 mm und von der Zylindermantelfläche eine Randschicht mit einer Dicke von 20 mm abgeschliffen wird.

Das Projektionsobjektiv zeichnet sich durch eine hohe Transparenz im kurzwelligen UV-Bereich, hohe UV-Strahlenbeständigkeit und eine ausgezeichnete chemische Beständigkeit gegenüber fast allen Medien aus und ist daher für den Einsatz in der Mikrolithographie, und insbesondere als letztes optisches Bauteil mit Kontakt mit der Immersionsflüssigkeit in der Immersions-Lithographie geeignet.

## Patentansprüche

1. Werkstoff, insbesondere für ein optisches Bauteil zum Einsatz in der Mikrolithographie, bestehend aus synthetisch erzeugten und ein polykristallines Gefüge bildenden Quarzkristalliten mit einer mittleren Korngröße im Bereich zwischen 500 nm und 30 µm.

2. Werkstoff nach Anspruch 1, **dadurch gekennzeichnet, dass** die Quarzkristallite eine mittlere Korngröße im Bereich zwischen 750 nm und 20 µm, vorzugsweise eine mittlere Korngröße im Bereich zwischen 1 µm bis 15 µm, und besonders bevorzugt eine mittlere Korngröße im Bereich zwischen 2 µm und 10 µm aufweisen.

3. Werkstoff nach Anspruch 1 oder 2, **dadurch gekennzeichnet, dass** er eine Gesamtporosität von weniger als 1 ppm aufweist.

4. Werkstoff nach einem der vorhergehenden Ansprüche, **dadurch gekennzeichnet, dass** die Größe vorhandener Poren weniger als 1 µm, vorzugsweise weniger als 0,5 µm beträgt.

5. Verfahren zur Herstellung eines Werkstoffs, insbesondere für ein optisches Bauteil zum Einsatz in der Mikrolithographie, umfassend folgende Maßnahmen:
(A) Bereitstellen einer Körnung aus synthetisch erzeugten Quarzkristallen mit einer mittleren Korngröße im Bereich zwischen 500 nm und 30 µm, und
(B) Sintern der Körnung zu einem Formkörper aus polykristallinem Quarz.

6. Verfahren nach Anspruch 5, **dadurch gekennzeichnet, dass** das Bereitstellen der Quarzkristall-Körnung gemäß Maßnahme (A) folgende Verfahrensschritte umfasst:
(a) Bilden von amorphem SiO₂ durch Hydrolyse oder Oxidation einer im Temperaturbereich bis 500 °C verdampfbaren Siliciumverbindung,
(b) Einsetzen des amorphen SiO₂ als Rohstoff für die Herstellung von synthetischem Quarz-Zuchtkristall, und
(c) Einsetzen des Quarz-Zuchtkristalls zur Bildung der Quarzkristall-Körnung.

7. Verfahren nach Anspruch 6, **dadurch gekennzeichnet, dass** das Bilden von amorphem SiO₂ gemäß Verfahrensschritt (a) ein Abscheiden von SiO₂-Partikeln unter Bildung einer massiven Vorform aus amorphem SiO₂ umfasst.

8. Verfahren nach Anspruch 7, **dadurch gekennzeichnet, dass** das Einsetzen des amorphen SiO₂ als Rohstoff für die Herstellung des synthetischen Quarz-Zuchtkristalls gemäß Verfahrensschritt (b) ein Aufbrechen der Vorform aus amorphem SiO₂ umfasst.

9. Verfahren nach Anspruch 7 oder 8, **dadurch gekennzeichnet, dass** die Vorform aus porösem SiO₂ gebildet wird.

10. Verfahren nach einem der Ansprüche 7 bis 9, **dadurch gekennzeichnet, dass** die Herstellung der synthetischen Quarz-Zuchtkristalle gemäß Verfahrensschritt (b) durch ein Hydrothermalverfahren erfolgt.

11. Verfahren nach einem der Ansprüche 6 bis 10, **dadurch gekennzeichnet, dass** das Verarbeiten der Quarz-Zuchtkristalle zu der Quarzkristall-Körnung gemäß Verfahrensschritt (c) ein Zerkleinern der Quarz-Zuchtkristalle umfasst.

12. Verfahren nach einem der vorhergehenden Ansprüche, **dadurch gekennzeichnet, dass** die synthetisch erzeugten Quarzkristalle mit einer mittleren Korngröße im Bereich zwischen 750 nm und 20 µm, vorzugsweise mit einer mittleren Korngröße im Bereich zwischen 1 µm bis 15 µm, und besonders bevorzugt mit einer mittleren Korngröße im Bereich zwischen 2 µm und 10 µm erzeugt werden.

13. Verfahren nach einem der Ansprüche 5 bis 12, **dadurch gekennzeichnet, dass** das Sintern der Quarzkristall-Körnung zu einem Formkörper gemäß Maßnahme (B) ein Gasdrucksintern umfasst.

14. Verfahren nach einem der Ansprüche 5 bis 13, **dadurch gekennzeichnet, dass** der Formkörper zu einem Rohling für ein optisches Bauteil bearbeitet wird,
wobei die Bearbeitung ein Entfernen von Randbereichen des Formkörpers umfasst.
